# EUROPEAN PATENT SPECIFICATION

(11) **EP 3 707 949 B1**
(45) Date of publication and mention of the grant of the patent: **24.07.2024**
(21) Application number: 18883678.7
(22) Date of filing: 28.11.2018
(51) Int. Cl.: H04W 72/04, H04W 56/00, H04L 5/00

(54) **SYNCHRONIZATION TRANSMISSION CARRIER SELECTION**
TRÄGERAUSWAHL FÜR SYNCHRONISATIONSÜBERTRAGUNG
SÉLECTION DE PORTEUSE DE TRANSMISSION DE SYNCHRONISATION

(30) Priority: 28.11.2017 US 201762591373 P
(43) Date of publication of application: 16.09.2020
(73) Proprietor: GUANGDONG OPPO MOBILE TELECOMMUNICATIONS CORP., LTD., Wusha, Chang'an Dongguan, Guangdong 523860 (CN)
(72) Inventor: ZHAO, Zhenshan, Dongguan Guangdong 523860 (CN); LU, Qianxi, Dongguan Guangdong 523860 (CN)
(74) Representative: Penza, Giancarlo
(86) International application number: PCT/CN2018/118019
(87) International publication number: WO 2019/105394

(56) References cited:
- WO-A1-2016/006859
- WO-A1-2016/175639
- WO-A1-2017/135650
- US-A1- 2018 139 769
- QUALCOMM INCORPORATED: "LTE Device to Device Proximity Services", vol. TSG RAN, no. Maui, USA; 20141208 - 20141211, 4 December 2014 (2014-12-04), XP051648088, Retrieved from the Internet <URL:http://www.3gpp.org/ftp/tsg%5Fran/TSG%5FRAN/TSGR%5F66/Docs/RP%2D141894%2Ezip> [retrieved on 20141204]
- J SCHLIENZ: "Device to Device Communication in LTE - Whitepaper", 29 September 2015 (2015-09-29), XP055562352, Retrieved from the Internet <URL:https://scdn.rohde-schwarz.com/ur/pws/dl_downloads/dl_application/application_notes/1ma264/1MA264_0e_D2DComm.pdf> [retrieved on 20190227]
- CA T: "Discussion on synchronization for carrier aggregation in V2X Phase 2", 3GPP TSG RAN WG1 MEETING #91, RL-1720159, vol. RAN WG1, 18 November 2017 (2017-11-18) - 1 December 2017 (2017-12-01), XP051369796
- HUAWEI ET AL.: "Remaining details for synchronization for carrier aggregation on sidelink", 3GPP TSG RAN WG1 MEETING #91, R1-1719514, vol. RAN WG1, 17 November 2017 (2017-11-17), XP051368821
- ZTE ET AL.: "Synchronization in sidelink CA", 3GPP TSG RAN WG1 MEETING #91, RI-1719655, vol. RAN WG1, 17 November 2017 (2017-11-17), XP051368834

## Description

### Technical Field

The present invention relates to the selection of synchronization transmission carriers.

### Background

With the advent of Internet-of-things (IoT) and modern as well as further generation communication standards and systems, more and more devices are becoming connected to generate and report, convey, share, and/or process data. With regard to the communication systems and paradigms are concerned, there is a strong trend for decentralized, local, and independent communication. While most of the established communication systems are based on a more or less hierarchical architecture, in which - for example - a mobile device communicates to a hierarchically upper base station, the trend moves toward flat hierarchical configurations. In such configurations mobile devices, such as mobile phones, devices, sensors, or, generally so-called user equipment (UE), are also allowed to communicate directly to each other, without a necessary involvement of a somewhat hierarchically higher entity, such as a base station, access point, (e)NodeB, and the like.

One field in which devices are increasingly connected to each other involves the field of so-called Vehicle-to-everything (V2X) communication which comprises passing information from a vehicle to any entity that may affect the vehicle, and vice versa. V2X is a vehicular communication system that includes more specific types of communication as Vehicle-to-Infrastructure (V2I), Vehicle-to-vehicle (V2V), Vehicle-to-Pedestrian (V2P), Vehicle-to-device (V2D), or Vehicle-to-grid (V2G). Thereby, most recent V2X communication uses cellular network and was initially defined - amongst others - in Long Term Evolution (LTE) in 3GPP Release 14. It is designed to operate in several modes, like Device-to-device (D2D). In 3GPP Release 15, the V2X functionalities are already expanded to support 5G (eV2X), wherein eV2X refers to the enhancement of V2X which has been facilitated through the provision of 5G (5^{th} generation) technology. Use cases for eV2X include vehicle platooning, automated driving, extended sensors, remote driving, and the like.

V2X communication in combination with cellular network leads to the advantages of support of both direct communications between vehicles (V2V/D2D) and traditional cellular-network based communication and provides migration path to 5G based systems and services.

In conventional cellular traffic, an Evolved Node B (eNB) communicates with the UE via Uplink (UL) and Downlink (DL) for both control signaling and conveying (payload) data. This concept is extended in D2D communication with the introduction of sidelink (SL) transmission. Resources assigned to the SL can be taken from the UL, i.e. from the subframes on the UL frequency in Frequency Division Duplex (FDD) or in Time Division Duplex (TDD).

For example, in the case of such SL transmission, a receiving UE may need to be synchronized to the sending UE in order to demodulate transmitted data at that receiving UE. A problem may occur when the sending and receiving UEs are for example in different non-synchronized cells such that the receiving UE needs additional information. Thus, Sidelink Synchronization Signals (SLSS), including Sidelink Primary Synchronization Signal (S-PSS) and Sidelink Secondary Synchronization Signal (S-SSS), may be used for synchronization in time and frequency. As, however, devices (i.e. UE) are allowed more and more freedom as regards localization, association to cells or other subordinate entities, access and authorization to such access to higher order systems, the mechanisms for achieving sufficient synchronization become more and more important.

It is therefore an object of the present invention to provide mechanisms for a reliable synchronization, and with this reliable transmission of payload data and communication as such, even in the absence of synchronization rendered by other entities, such as cells and their associated equipment (e.g. base station, eNB, etc.). It is further an object of the present invention to provide corresponding user equipment that can achieve reliable and synchronized data communication even in absence of the above-mentioned other entities.

The documents US2018/139769A1, "LTE Device to Device Proximity Services" with RP-141894, "Device to Device Communication in LTE - Whitepaper" with XP055562352, "Discussion on synchronization for carrier aggregation in V2X Phase 2" with R1-1720159, "Remaining details for synchronization for carrier aggregation on sidelink" with R1-1719514 and "Synchronization in sidelink CA" with R1-1719655 have disclosed the related art of the present disclosure.

### Summary

The mentioned problems are solved by the subject-matter of the independent claims. Further preferred embodiments are defined in the dependent claims.

The invention is set out in the appended set of claims.

According to an embodiment of the present invention, there is provided a user equipment, UE, comprising a determination unit configured to determine a service of a data signal to be transmitted, a selection unit configured to select one or more carriers for transmitting a synchronization signal from a carrier set, and a transmission unit configured to convey the synchronization signal over the one or more selected carriers, wherein the selection unit is further configured to select the one or more carriers for transmitting the synchronization signal based on a mapping between service and carrier, the mapping between service and carrier maps each service of the data signal to one or more carriers, and the one or more selected carriers are used for Physical Sidelink Broadcast Channel (PSBCH) transmission, and the synchronization signal is a Sidelink Synchronization Signal (SLSS).

According to an embodiment of the present invention, there is provided a method for operating a user equipment, UE, comprising the steps of determining a service of a data signal to be transmitted, selecting one or more carriers for transmitting a synchronization signal from a carrier set, and transmitting the synchronization signal over the one or more selected carriers, wherein the step of selecting comprises selecting the one or more carriers for transmitting the synchronization signal based on a mapping between service and carrier, the mapping between service and carrier maps each service of the data signal to one or more carriers, and the one or more selected carriers are used for Physical Sidelink Broadcast Channel (PSBCH) transmission, and the synchronization signal is a Sidelink Synchronization Signal (SLSS).

According to an embodiment of the present invention, there is provided a method for operating a user equipment, UE, comprising the steps of determining one or more carriers for receiving synchronization signal from a carrier set, and receiving the synchronization signal over the one or more determined carriers, wherein the one or more carriers for receiving the synchronization signal are determined based on a mapping between service and carrier, the mapping between service and carrier maps each service of a data signal to one or more carriers, and the one or more determined carriers are used for Physical Sidelink Broadcast Channel (PSBCH) transmission, and the synchronization signal is a Sidelink Synchronization Signal (SLSS).

### Brief description of the drawings

Embodiments of the present invention, which are presented for better understanding the inventive concepts and which are not to be seen as limiting the invention, will now be described with reference to the figures in which:
- Figure 1: shows a schematic view of direct communication amongst user equipment (UE) in a scenario of the related arts;
- Figure 2: shows a schematic view of a scenario with carriers between two devices employing synchronized transmission of data according to an embodiment of the present invention;
- Figures 3A to 3C: shows a schematic views of different types of carrier aggregation that can apply to the embodiments of the present invention;
- Figures 4A to 4E: show schematic views of scenarios with carriers between two devices employing synchronized transmission of data according to further embodiments of the present invention;
- Figures 5A and 5B: show schematic views of use cases employing user equipment in a V2X environment according to further embodiments of the present invention;
- Figure 6: shows a schematic view of a general device embodiment of the present invention;
and
- Figures 7A and 7B: show flowcharts of general method embodiments of the present invention.

### Detailed Description

Embodiments of the invention are those whose scope is within that of the appended claims. Other passages stating embodiments which do not fall under the scope of the appended claims are to be considered as examples.

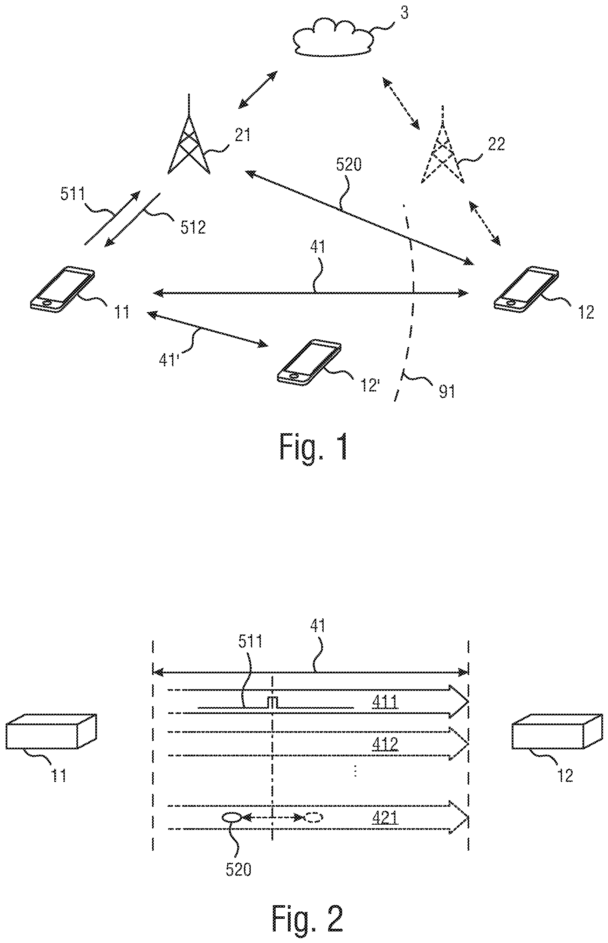

Figure 1 shows a schematic view of direct communication amongst user equipment (UE) in a scenario of the related arts. Accordingly, there is shown a configuration of two UE shown as an example in the form of mobile phones 11 and 12. These UE may comprise processing and communication functionalities so as to operate along one or more of the conventional telecommunication standards, including - but not limited to - GSM, PCS, 3GPP, LTE, LTE-A, UMTS, 3G, 4G, 5G. In one or more of these standards communication takes place toward a base station (BS) 21 (other denominations such as NodeB, eNodeB, gNodeB, etc. may apply according to the respective standard, topology and infrastructure) on an uplink (UL) direction 511 carrying data from the UE 11 toward the BS 21, and on a downlink (DL) direction 512 carrying data from the BS 21 toward the UE 11. The BS 21 may, in turn, communicate to a background network 3 (core network, internet, and the like). The second UE, e.g. mobile phone 12, may communicate over the same BS 21 over a respective UL and DL 520, or over a further BS 22 over respective links (dashed lines).

In some telecommunication environments starting with the so-called fifth generation (5G) standards, the UE 11 and UE 12 may also be allowed to communicate directly over a so-called sidelink (SL) 41. This SL 41 may comprise one or more physical and logical channels, carriers, and the like as will be described in greater detail below. One characteristic of such a SL 41 resides in whether the SL carries synchronization information or whether such synchronization information can be dispensed with since it can be assumed that the involved UE 11 and UE 12 can communicate in synchronized manner even without the transmission of the aforementioned synchronization information.

In some technologies and configurations the respective characteristic is chosen based on some threshold 91, which can be in relation to a spatial distance between the two involved devices 11, 12, and/or an associated measured signal strength that varies as a result of the corresponding distance. For example, the UE 11 may employ a SL 41' to the UE 12' which is inside an area denoted by the spatial threshold 91 (boundary). In this situation, the UE 12' can be for example assumed to be in reach of the same BS 21 as is the UE 11. For example, both UE 11 and UE 12' may be assumed to be in the same cell under control of the one BS 21. As a consequence, both UE 11 and UE 12' may be assumed to be synchronized anyway, since the signals from and/or to the BS (e.g. UL and/or DL) may already provide synchronization. In this scenario, communication (data transmission) can be effected over the SL 41' without the need for additional synchronization information over that SL 41'.

On the other hand, however, this characteristic may change to a situation in which the UE 11 and UE 12 communicate over a SL 41 and in which the UE 12 is outside the threshold 91. For example, one of the involved UE may have become aware of a reduced received signal strength and thus may determine the necessity for an explicit synchronization between the UE 11 and UE 12. In such configurations, the SL 41 may carry synchronization signals over one carrier and carry associated data over the same carrier or another carrier, wherein the receiving UE is configured to associate the correct data to the received synchronization signals. In this way, synchronized communication can take place between the two UE even in situations where no external mechanism is available for ensuring synchronization.

Figure 2 shows a schematic view of a scenario with carriers between two devices employing synchronized transmission of data according to an embodiment of the present invention. Specifically, it is shown a SL communication 41 between UE 11 and UE 12, wherein, for example, multiple carriers 411, 412 ... are allocated between the UE 11 and the UE 12. The UE 11 is capable to transmit a synchronization signal over one or more carriers, wherein the UE 11 selects one or more carriers from a carrier set. In this configuration, a synchronization signal 511 is conveyed over the one or more selected carriers, e.g. carrier 411. The embodiment of the present invention can provide the flexibility of UE for selecting one or more carriers from a carrier set for conveying synchronization signals.

Generally, the synchronization signal 511 is transmitted to assist other UE, i.e. a receiving UE, to synchronize to the transmitting UE. As illustrated in Figure 2, if UE 11 is the transmitting UE and UE 12 is the receiving UE, the synchronization signal 511 is transmitted to assist UE 12 to synchronize to UE 11.

In one embodiment, a carrier set is used for sidelink data transmission, while the one or more carriers for transmitting synchronization signal is selected from the carrier set. This embodiment is not covered by the scope of the appended claims.

According to the present embodiment, the UE 11 has the capability to select one or more carriers from a carrier set for transmitting the synchronization signal 511. The synchronization signal 511 can be transmitted over only one carrier selected from the carrier set, or also over more than one carriers selected from the carrier set. In this way, embodiments of the present invention can provide the flexibility of UE for selecting one or more carriers from a carrier set for conveying synchronization signals needed for sidelink data transmission. In other words, user equipment according to an embodiment of the present invention is able to select one carrier from a set of such carriers that are used for communication between this and a receiving UE, and to subsequently use this selected carrier to transmit a synchronization signal. In addition to this, further embodiments of the present invention can achieve carrier aggregation for transmission of the synchronization signal 511 if more than one carriers are selected from the carrier set for conveying a synchronization signal.

More specifically, carrier aggregation may be used for both FDD (Frequency Division Duplex) and TDD (Time Division Duplex) in order to increase the bandwidth and thus the bitrate of signal transmission. One way to implement carrier aggregation may be to use contiguous component carriers within the same operating frequency band, i.e. intra-band contiguous carrier aggregation. In this matter, a component carrier refers to an aggregated carrier. As contiguous component carriers are often difficult to realize due to operator frequency allocation scenarios, non-contiguous allocation may be used. Non-contiguous allocation either refers to intra-band non-contiguous allocation, i.e. the component carriers belong to the same operating frequency band but form gaps in between, or inter-band non-contiguous allocation, i.e. the component carriers belong to different operating frequency bands.

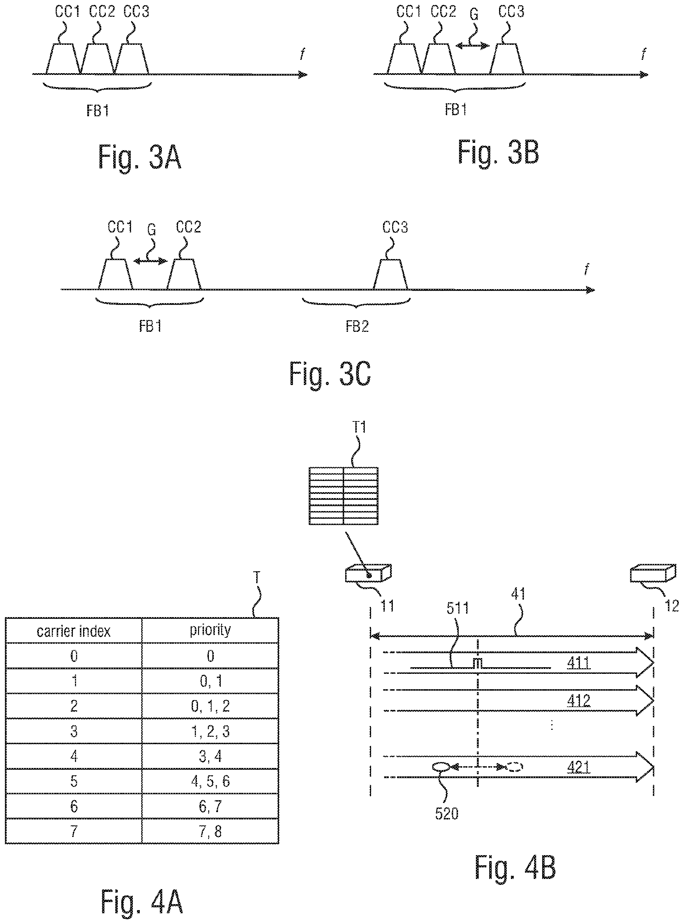

Figures 3A, 3B, and 3C show schematic views of different types of carrier aggregation that can apply to the embodiments of the present invention. More specifically, these figures show the localization of individual so-called component carriers in the frequency (f) space, in which Figure 3A shows intra-band contiguous carrier aggregation, Figure 3B shows intra-band non-contiguous carrier aggregation, and Figure 3C shows inter-band non-contiguous carrier aggregation. All three cases show three component carriers CC1, CC2, and CC3 which are either located continuously or non-continuously in one frequency band FB1 or located non-continuously in two frequency bands FB1 and FB2. For non-contiguous carrier aggregation, the component carriers CC1, CC2, and CC3 may form a gap G. For example in Figure 3B, there may be a gap G between component carriers CC2 and CC3 and in Figure 3C there may be a gap G between component carriers CC1 and CC2. The above mentioned component carriers can be a possible implementation for the one or more carriers that carry synchronization signals as defined and described in greater detail elsewhere in the present disclosure in the context of the respective embodiments. Carrier aggregation may also be possible for a time (t) space, wherein the corresponding component carriers may be localized continuously or non-continuously in the time space.

In an embodiment of the present invention, the two carriers 411, 412 for transmitting the synchronization signal may be used to carry a SL Broadcast Control Channel (SBCCH) which refers to a SL logical channel and is connected to a SL transport channel, i.e. a SL Broadcast Channel (SL-BCH). The underlying SL physical channel may be defined as a Physical SL Broadcast Control Channel (PSBCH). The carriers 411, 412 are selected from a carrier set used for sidelink data transmission. This may be connected to a SL Shared Channel (SL-SCH), i.e. a transport channel. In this regard it should be noted that a risk of collision may exist, which may specifically depend on the resource assignment from an eNB. The eNB may for example assign different time-frequency resources to UEs for avoiding collision. The SL-SCH may generally interface to a Physical SL Shared Channel (PSSCH) which may then be the SL physical channel for SL data transmission. This embodiment is not covered by the scope of the appended claims.

As mentioned above, carrier aggregation may be used for transmitting synchronization signals, i.e. SLSS, from UE, like UE 11, to another UE, like UE 12. However, the UE capabilities, i.e. limitation of UE transmission chains, must be considered for selecting a number of carriers 411, 412 for carrier aggregation. In a sense, the respective capabilities for all the individual UEs in a chain may need to be considered. For example, up to eight carriers in a carrier set may be supported for SLSS carrier aggregation in eV2X, wherein the transmitting UE, for example UE 11, may only support less than those eight carriers from the carrier set. For example, the transmitting UE may only support four carriers for carrier aggregation to transmit SLSS over the PSBCH. Thus, a selection unit of the transmitting UE can be provided to select one or more of the carriers from a carrier set for transmitting a synchronization signal, the number of the carriers 411, 412 depending on capabilities, i.e. limitations of UE transmission chains, of the UE. The carriers for transmitting the synchronization signal may be supported in eV2X communication.

Thus, in an embodiment of the present invention, the UE 11 may comprise a selection unit configured to select one or more carriers for transmitting a synchronization signal from a carrier set, and a transmission unit configured to convey the synchronization signal over the one or more selected carriers. This embodiment is not covered by the scope of the appended claims. For carrier aggregation, the transmission unit may be configured to convey the synchronization signal over two or more selected carriers. The transmission unit may be implemented by a transmitter and the selection unit may be implemented by a processor.

In another embodiment, the carrier set is used for sidelink data transmission, the transmission unit may further be configured to convey a data signal over at least one carrier of the carrier set.

The synchronization signal may synchronize a receiving UE to the UE for transmitting the sidelink data signal. This embodiment is not covered by the scope of the appended claims.

Figures 4A to 4E show schematic views of scenarios with carriers between two devices employing synchronized transmission of data according to further embodiments of the present invention. Specifically, embodiments are described that provide solutions on how to select one or more carriers, wherein the one or more selected carriers can then be used for transmitting a synchronization signal. Thus, the embodiments of the present invention can provide the flexibility of UE for selecting one or more carriers for conveying synchronization signals. For carrier aggregation, more than one carriers are selected to convey the synchronization signal. The synchronization signal is a SLSS and the selected one or more carriers are one or more SLSS carriers used for SLSS transmission. If more than one carriers are selected for SLSS transmission, the selected carriers may be SLSS carriers used for SLSS carrier aggregation.

Figure 4A illustrates an embodiment in which a priority table T is employed which maps carrier indexes to respective priorities. In an embodiment this may include eight carriers with indexes 0 to 7 when eight carriers are supported for synchronization signal carrier aggregation in eV2X.

As illustrated by the priority table T in Figure 4A, different carriers may be configured, i.e. mapped with different priorities, wherein a priority value indicates the priority of service. One carrier indicated by one carrier index may be mapped with a single priority corresponding to a single service or may be mapped with more than one priority corresponding to more than one service. A service may refer to a Cooperative Awareness Message (CAM) service, a Decentralized Environmental Notification Message, DENM, service, a sensor sharing service, or the like for a data signal.

For example, the carrier with index 0 may be mapped to priority 0, while the carrier with index 1 may be mapped to priorities 0 and 1. In this matter, the priority table T illustrates that a specific service with priority 0 may be mapped to a plurality of carriers with the indexes 0, 1, and 2, while another specific service with priority 1 may be mapped to a plurality of carriers with indexes 1, 2, and 3.

The UE may select one or more specific carriers with the highest priorities compared to the remaining carriers from a carrier set to transmit synchronization signals like SLSS over PSBCH. If eight carriers are for example defined between two UE, then the carrier set will comprise of eight carriers and the transmitting UE will select one or more carriers for conveying a synchronization signal. As stated above, the number of selected carriers may depend on the UE capabilities, i.e. limitation of UE transmission chains. The at least one carrier for transmitting the synchronization signal is used for PSBCH transmission.

For example, if up to eight carriers are supported in eV2X, i.e. form a carrier set, and the mapping between the carrier indexes and priorities are as illustrated in Figure 4A, the UE which may only support transmission of the synchronization signal, like the SLSS, on four carriers, may select carriers based on the priority per carrier. In this case, the carriers with carrier indexes 0, 1, 2, and 3 may be selected for the transmission of synchronization signals, like SLSS, as a small priority value may indicate a higher priority compared to a large priority value. This means that a carrier with a small priority value, i.e. a higher priority, may be selected by the selection unit of the UE for transmitting the synchronization signal, like the SLSS.

Also, a more general embodiment of the present invention may refer to a priority approach which is used to select one or more specific carriers for conveying synchronization signal. If more than one carriers are selected, synchronization signal carrier aggregation as for example SLSS carrier aggregation will be given. In this embodiment, the selected carriers in a carrier set which may be used for carrier aggregation may be mapped with a plurality of priorities and the selection unit of the UE may select the at least two carriers from the carrier set for transmitting the synchronization signal based on the priorities of the carriers. If no carrier aggregation is desired, the carriers in a carrier set which are defined between two UE may be mapped with a plurality of priorities and the selection unit of the transmitting UE may select one carrier from the carrier set for transmitting the synchronization signal based on the priorities of the carriers. Thus, the embodiment of the present invention can provide the flexibility of UE for selecting one or more carriers for conveying synchronization signals needed for data transmission.

Figure 4B illustrates a similar scenario as already described in greater detail in conjunction with Figure 2 (repetitive descriptions are therefore omitted). However, in the scenario as illustrated in Figure 4B the location of a priority table T1 is shown. If, for example, UE 11 is the UE which transmits the synchronization signal, the priority table T1 may be stored on UE 11 for selecting one or more carriers based on the priorities. If, in another example, UE 12 transmits synchronization signals, then the priority table T1 might be stored on UE 12. The priority table T1 may be equal to the exemplary priority table T of Figure 4A or may be any other priority table mapping carrier indexes to priority values.

Thus, an embodiment of the present invention is to select carriers with higher priority (ProSe Per-Packet Priority, PPPP) for synchronization signal transmission, like SLSS transmission. Different carriers can be configured or mapped with different priorities, wherein one carrier can be configured/mapped with single priority or more than one priority. The UE can select the carriers with highest priorities to transmit synchronization signals, like SLSS/PSBCH. For example, up to eight carriers may be supported in eV2X and the mapping between carriers and priorities may be as illustrated as an example in Figure 4A. If UE can only support transmitting SLSS/PSBCH on four carriers, then the UE, in this embodiment, will select carriers based on the priority per carrier. In this case, the carriers 0/1/2/3 are to be selected for transmission of SLSS/PSBCH. It should be noted that a small value of priority means higher priority here.

In a further embodiment, the selection of at least one carrier for transmitting synchronization signals may be based on the carriers on which PSCCH and/or PSSCH is transmitted. The physical channel PSSCH has been described in more detail above and the physical channel PSCCH may refer to a Physical SL Control Channel containing SL control information (SCI). SCI may be necessary for a receiving UE in order to be able to receive and demodulate transmitted signals.

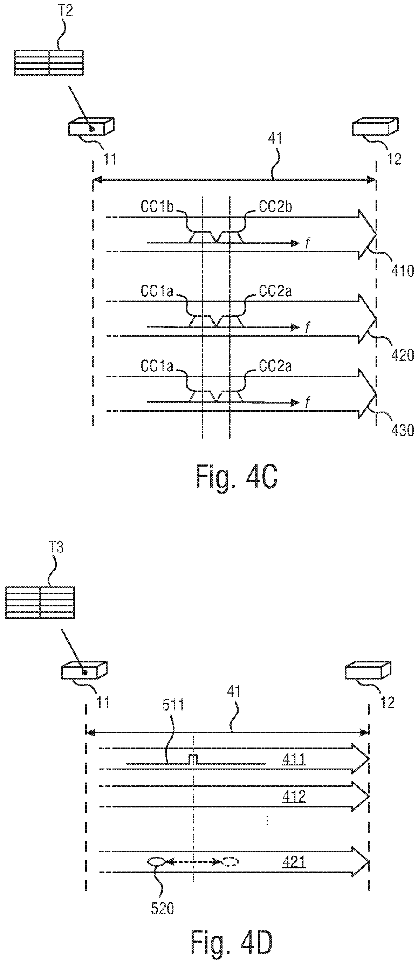

Figure 4C illustrates a similar scenario as already described in greater detail in conjunction with Figure 2 (repetitive descriptions are therefore omitted). However, in the scenario as illustrated in Figure 4C, two physical channels 410 and 420 are shown, wherein physical channel 410 represents the PSBCH and physical channel 420 represents either the PSCCH or PSSCH. If the physical channel 420 is a PSSCH, component carriers CCla and CC2a may be carrier 421 for carrying a data signal. The component carriers CCla and CC2a as illustrated in Figure 4C are distinguished by frequency f. Instead of FDD, the component carriers may also be selected by using TDD.

In this embodiment and in view of Figure 4C, if the UE for transmitting synchronized signals does not support transmission of synchronized signals, like SLSS, on all carriers in a carrier set which have been defined between the transmitting UE and a receiving UE, the transmitting UE, like for example UE 11, selects one or more carriers based on the carriers used for PSCCH and/or PSSCH transmission. If the selection of the one or more carriers depends on PSSCH transmission, the selection of the one or more carriers will be based on the carriers/carrier set carrying PSSCH. If the selection of the one or more carriers depends on PSCCH, the selection of the one or more carriers will be based on the carriers/carrier set carrying PSCCH is also possible to select one or more carriers based on both PSCCH and PSCCH.

This concept is also illustrated as an example in Figure 4C, wherein the carriers CClb and CC2b of the physical channel 410, i.e. the PSBCH, may be selected based on the component carriers CCla and CC2a. That is, the frequencies of the carriers CClb and CC2b are selected to be equal to the frequencies of component carriers CCla and CC2a. Similar considerations would apply to the case of selecting carriers for TDD. The list of component carriers used for PSCCH or PSSCH transmission may be also stored in a table T2 on the transmitting UE, like on UE 11 as illustrated in Figure 4C. If UE 12 is the transmitting UE, then the table T2 might be stored on UE 12. Table T2 may for example map PSSCH/PSCCH to the used component carriers, i.e. map PSSCH to component carriers CCla and CC2a. By using table T2, the UE may select the corresponding component carriers CClb and CC2b. Alternatively, the list of component carriers used for PSCCH or PSSCH transmission may be determined by a service-carrier mapping table. Or, the list of component carriers used for PSCCH or PSSCH transmission may be selected according to the parameter of the carrier, such as Channel Busy Ratio (CBR).

In other words, if UE cannot support transmission of synchronization signals, like SLSS, on all available carriers in a carrier set which have been defined for transmitting synchronization signals, the UE might select one or more carrier(s) based on component carriers which are used for PSCCH transmission, PSSCH transmission, or on both PSCCH and PSSCH transmission. For example, if up to eight carriers are supported in eV2X, but UE can only support synchronization signal transmission on no more than four carriers, the UE might select the no more than four carriers from the supported carrier set for synchronization signal carrier aggregation based on the component carriers used for PSCCH transmission, PSSCH transmission, or PSCCH and PSSCH transmission. For instance, if the UE uses component carriers 1 and 3 for PSCCH/PSSCH transmission, the UE, in this embodiment, will only transmit synchronization signals, like SLSS over PSBCH, on carriers 1 and 3; or the UE will only transmit synchronization signals, like SLSS over PSBCH, on either carrier 1 or carrier 3

Thus, in another embodiment, the carriers for synchronization signal transmission are selected based on PSSCH/PSCCH transmission. This embodiment is not covered by the scope of the appended claims. If the UE cannot support to transmit synchronization signals, like SLSS/PSBCH, on all carriers, it can select the carrier(s) for transmitting synchronization signal from the carriers which are to be used for PSCCH/PSSCH transmission. For example, if up to eight carriers are supported in eV2X and the UE can only support SLSS/PSBCH transmission on no more than four carriers, the UE can select the carriers for transmitting synchronization signal from the carriers that will be used for PSCCH/PSSCH transmission. For example, if the UE transmits PSCCH/PSSCH on carriers 1 and 3, it will only transmit SLSS/PSBCH on carriers 1 and 3, or on carrier 1, or on carrier 3, in this embodiment.

In a further embodiment, the selection unit of UE for transmitting synchronization signals, like SLSS, selects the at least one carrier for transmitting the synchronization signal based on a mapping between service and carrier, i.e. a carrier-service mapping table. The mapping between service and carrier maps each service of a data signal to one or more carriers. A determination unit of the UE determines a service of the data signal to be transmitted to another, receiving UE and the carrier-service mapping table then maps the determined service of the data signal to corresponding carriers. The service of the data signal may be a CAM service, a DENM service, a sensor sharing service, or the like. The determination unit may be implemented by a processor.

The mapping between service and carrier, i.e. the carrier-service mapping table, can be implemented in the UE in different ways. For example, the mapping between service and carrier may be obtained from pre-configuration or network configuration. For network configuration, an eNB may configure the mapping between service and carrier through Signal Information Block (SIB) signaling, Radio Resource Control (RRC) signaling, or through a control channel.

Figure 4D illustrates a similar scenario as already described in greater detail in conjunction with Figure 2 (repetitive descriptions are therefore omitted). However, in the scenario as illustrated in Figure 4D a carrier-service mapping table T3 may be stored on a transmitting UE. In this example, UE 11 may transmit the synchronization signals, like SLSS, so that the carrier-service mapping table T3 may be stored on UE 11. If UE 12 transmits synchronization signals, then a respective carrier-service table T3 might be stored on UE 12.

Referring to the exemplary carrier-service mapping table T3 of Figure 4D, the carrier-service mapping table T3 may map the CAM service to carrier indexes 0, 1, and 2, and may map the DENM service to the carrier indexes 1, 2, and 3. If UE 11 transmits a synchronization signal, like SLSS, for the CAM service, then UE 11, in this embodiment, will select one or more carriers with the carrier indexes 0, 1, or 2 depending on the UE capabilities, i.e. limitations on UE transmission chains. That is, if for example UE 11 solely supports transmission on two carriers, then UE 11 will select two carriers out of the carrier indexes 0, 1, or 2. If, however, UE 11 transmits a synchronization signal, like SLSS, for the DENM service, then UE 11 will select carriers with the carrier indexes 1, 2, or 3 depending on its capabilities, i.e. UE limitations on transmission chains.

Thus, in a further embodiment, the carriers onto which the kind of service which the data packet to be transmitted belongs to is mapped are selected for synchronization signal transmission. In this matter a kind of service can be mapped onto several carriers. If a UE cannot support synchronization signal, like SLSS/PSBCH, transmission on all carriers, it can select the carriers based on the following principle. First, the UE may determine which kind of service the data packet to be transmitted belongs to. Second, based on the carrier-service mapping table, the UE may select the carriers that the kind of service is mapped to for transmitting SLSS/PSBCH.

For example, up to eight carriers may be supported in eV2X, wherein CAM service may be mapped onto carriers 1 and 2, DENM service may be mapped onto carriers 3 and 4, and sensor sharing service may be mapped onto carriers 5 and 6. If the data packet to be transmitted is a CAM message, then the UE will only select carriers 1 and 2 for SLSS/PSBCH transmission.

Another embodiment deals with selecting the at least one carrier for transmitting the synchronization signal based on information from a predetermined list. The process of selection may be performed by a selection unit of the UE which may transmit synchronization signals, like SLSS, over the selected carriers.

For instance, the standard of Rel-14 determines that UE may use some carrier(s) for V2X service. To be backward compatible with Rel-14, the UE which may support transmission of synchronization signals, like SLSS, on at least one carriers for synchronization signal transmission depending on the carriers defined in Rel-14.

In more detail, for example up to eight carriers may be supported in eV2X and carriers with indexes 1 and 2 may be used by the UEs in Rel-14. The UEs as defined in Rel-14 can only transmit signals on one carrier, but it can receive signals on multiple carriers in case the UEs are synchronized to the carriers separately.

In contrast thereto, a UE as defined in Rel-15 can transmit synchronization signals, like SLSS, over PSBCH on multiple carriers, for example on no more than four carriers. To be able to select four carriers, while being backward compatible with Rel-14, the UE as defined in Rel-15 may select the carriers based on information from a predetermined list.

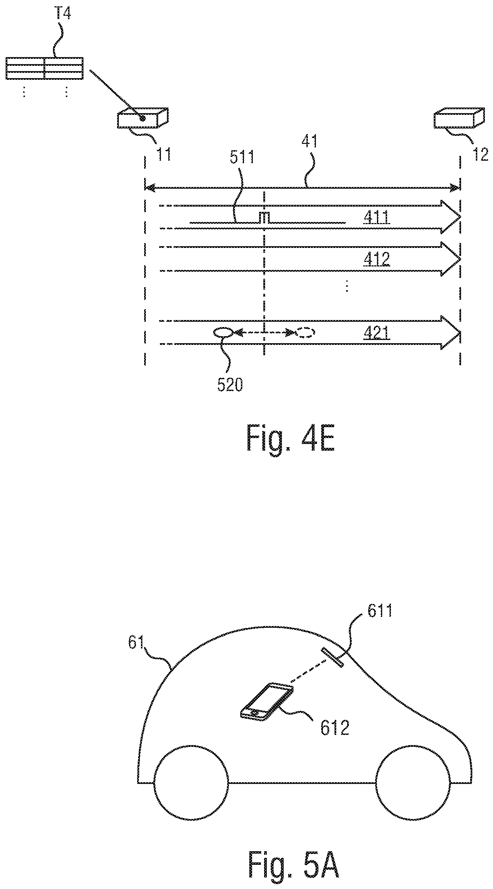

Figure 4E illustrates a similar scenario as already described in greater detail in conjunction with Figure 2 (repetitive descriptions are therefore omitted). However, in the scenario as illustrated in Figure 4E the predetermined list may be stored in a table T4. In this table T4, an entry of Rel-14 may be mapped to specific carriers to enable backward compatibility. Table T4 might be stored on UE 11 if UE 11 is the UE transmitting synchronization signals, like SLSS, on predetermined carriers. If UE 12 transmits synchronization signals, like SLSS, then table T4 might be stored on UE 12. According to this exemplary table T4, wherein one entry with Rel-14 may be mapped to carrier indexes 1 and 2, UE 11 may refer to table T4, read out the entry for Rel-14, and may select from the corresponding carriers with indexes 1 and 2 based on UE capabilities, i.e. limitations on transmission chains, to transmit synchronization signals, like SLSS, while ensuring backward compatibility with Rel-14.

Thus, in another embodiment, the carriers for synchronization signal transmission, like SLSS transmission, may be selected based on capabilities by Rel-14 UEs, wherein a Rel-14 UE may use some carrier(s) for V2X service. To be backward compatible with the Rel-14 UE, the UE which can support synchronization signal transmission, SLSS/PSBCH transmission, on multiple carriers should transmit SLSS/PSBCH on Rel-14 carriers. For example, up to eight carriers may be supported in eV2X and carriers 1 and 2 may be used for Rel-14 UE. In this matter, the Rel-14 UE can only transmit on one carrier, but it can receive on multiple carriers in case it can be synchronized to the carriers separately. If, for example, a Rel-15 UE can transmit SLSS/PSBCH on multiple carriers, for example a UE can transmit SLSS/PSBCH on no more than four carriers, it will select the carriers, such as carriers 1 and 2, to transmit SLSS/PSBCH, to be backward compatible with Rel-14.

In summary, at least some embodiments of the present invention and as described above relate to the question how to select one or more carriers from a carrier set for conveying a synchronization signal, e.g. SLSS, as for example in LTE eV2X. In addition, at least some embodiments of the present invention relate to carrier aggregation as for example in LTE eV2X, and to the question how synchronization signals, e.g. SLSS, are transmitted on multiple carriers. It may be possible for UE to transmit a synchronization signal on all carriers. However, UE capabilities, i.e. limitation of UE transmission chains, must be considered, as the UE may not support transmission of synchronization signals on all carriers. Thus, the disclosed embodiments may provide a solution to the problem of how to select specific carrier(s) from a carrier set for synchronization signal transmission based on UE capabilities, i.e. when limitation of UE transmission chains occurs. Additionally, the disclosed embodiments of the present invention can provide the flexibility of UE for selecting one or more carriers for conveying synchronization signals.

The carrier set as described in greater detail elsewhere in the present disclosure in the context of the respective embodiments may thereby comprise any one of, any combination of, or any intersection of one of a carrier set that is configured to do carrier aggregation; a carrier set that is configured to be used for synchronization signal transmission; a carrier set that is configured to be mapped onto a service; or a carrier set that is selected for PSCCH and/or PSSCH transmission.

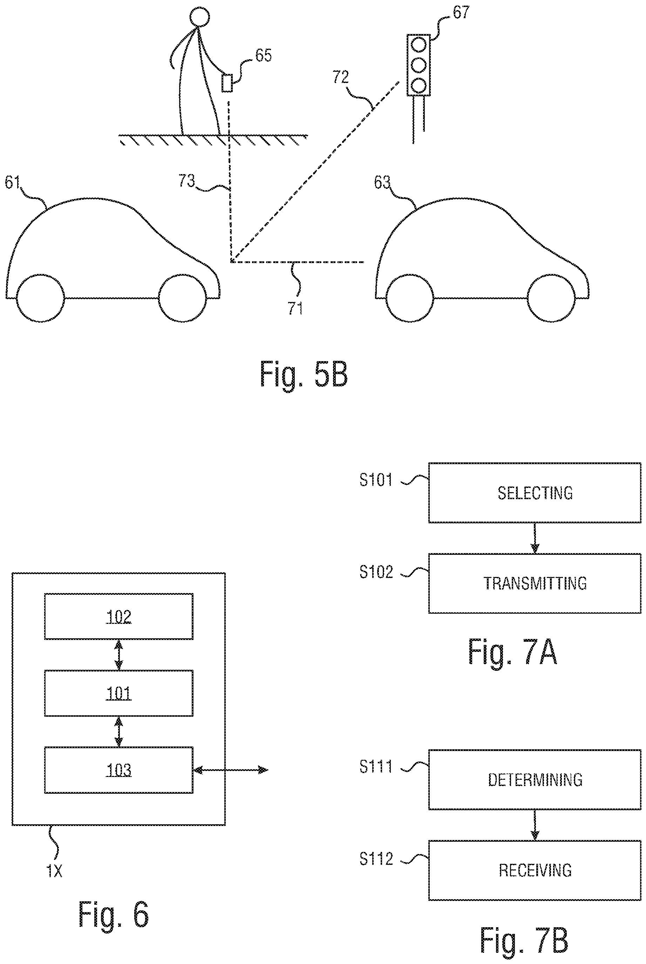

Figures 5A and 5B show schematic views of use cases employing pieces of UE in a V2X environment according to further embodiments of the present invention. Specifically, the shown configurations relate to embodiment of the present invention that specifically relate to V2X applications and scenarios.

Figure 5A shows an example of Vehicle-to-device (V2D) communication in a vehicle 61 which may communicate with a UE 612 over its infotainment system 611. The UE 612 may for example be a mobile phone which may provide information to a driver of the vehicle 61 in order to simplify the interaction between the vehicle 61 and the driver and to improve a driving experience. The synchronization between UE 612 and vehicle 61/infotainment system 611 may be performed by synchronization signals, like SLSS, over PSBCH, wherein the corresponding one or more carriers for carrying the synchronization signals may be selected from a carrier set based on the capabilities of vehicle 61/infotainment system 611 and UE 612 and on a concept as described with regard to the embodiments.

Figure 5B shows a scenario of Vehicle-to-vehicle (V2V) communication 71, Vehicle-to-pedestrian (V2P) communication 73, and Vehicle-to-infrastructure (V2I) communication 72. A vehicle 61 may communicate with another vehicle 63 over V2V 71 in order to improve safety to traffic. Vehicle 63, for example, may send information about decelerating or breaking to vehicle 61 to cause vehicle 61 to simultaneously decelerate or break. This kind of information exchange over V2V 71 may lead to less accidents and improved safety. The synchronization between vehicle 61 and vehicle 63 may be performed by synchronization signals, like SLSS, over PSBCH, wherein the corresponding one or more carriers for carrying the synchronization signals may be selected from a carrier set based on the capabilities of vehicle 61 and vehicle 63 and on a concept as described with regard to the embodiments.

An exemplary V2P communication 73 as illustrated in Figure 5B may be between the vehicle 61 and a hand-held device 65 of a pedestrian. The pedestrian may use the hand-held device 65 to be able to communicate with vehicle 61 over V2P 73. The hand-held device 65 may for example send the position of the pedestrian to vehicle 61 in order to avoid an accident between the vehicle 61 and the pedestrian. The synchronization between vehicle 61 and hand-held device 65 may be performed by synchronization signals, like SLSS, over PSBCH, wherein the corresponding one or more carriers for carrying the synchronization signals may be selected from a carrier set based on the capabilities of vehicle 61 and hand-held device 65 and on a concept as described with regard to the embodiments.

A further V2I communication 72 as illustrated in Figure 5B may be between vehicle 61 and a traffic light 67. The traffic light 67 may send a stop signal to vehicle 61 in order to signalize vehicle 61 to come to a stop. By doing so the number of road accidents may be decreased and road safety may be improved. The synchronization between vehicle 61 and traffic light 67 may be performed by synchronization signals, like SLSS, over PSBCH, wherein the corresponding one or more carriers for carrying the synchronization signals may be selected from a carrier set based on the capabilities of vehicle 61 and traffic light 67 and on a concept as described with regard to the embodiments.

Figure 6 shows a schematic view of a general device embodiment of the present invention. Specifically there is shown user equipment, UE, 1X, which can be any one of the user equipment, UE, as described in the present disclosure. Specifically, it can be a transmitting UE, such as UE 11, a receiving UE, such as UE 12, or a UE which is capable of both in which the functionalities are accordingly combined.

The user equipment 1X comprises at least a processing unit or circuit 101, a memory unit or circuit 102, and a communication unit or circuit 103, which is capable of transmitting and/or receiving signals. The memory unit or circuit 102 may store code that instructs the processing unit or circuit 101 during operation to transmit a synchronization signal over one or more carriers, and to select one or more of said carriers for transmitting a synchronization signal, wherein the synchronization signal is conveyed over the one or more selected carriers. The synchronization signal may synchronize a receiving UE to a UE for transmitting a data signal. The processing unit may be implemented by a processor, the communication unit may be implemented by a transmitter and/or receiver, and the memory unit may be implemented by a storage.

Additionally or alternatively, the memory unit or circuit 102 may store code that instructs the processing unit or circuit 101 during operation to receive one or more carriers, and to determine one or more of said carriers for receiving a synchronization signal from a carrier set, wherein the synchronization signal is received over the one or more selected carriers. A receiving UE may be synchronized by the synchronization signal to a transmitting UE for receiving a data signal.

Figures 7A shows a flowchart of a general method embodiment of the present invention. Specifically, a method is shown for operating a user equipment, UE, that comprises a processing unit, a memory unit, and a transmission unit. The present method embodiment may comprise a step (S101) of selecting one or more carriers for transmitting a synchronization signal from a carrier set, and a step (S102) of transmitting the synchronization signal over the one or more selected carriers. The processing unit may be implemented by a processor, the memory unit may be implemented by a storage, and the transmission unit may be implemented by a transmitter.

Figures 7B shows a flowchart of a general method embodiment of the present invention. Specifically, a method is shown for operating user equipment, UE, that comprises a processing unit, a memory unit, and a reception unit. The present method embodiment may comprise a step (S 111) of determining one or more carriers for receiving a synchronization signal from a carrier set, and a step (S112) of receiving the synchronization signal over the one or more determined carriers. The processing unit may be implemented by a processor, the memory unit may be implemented by a storage, and the reception unit may be implemented by a receiver.

Embodiments may relate to the field of Sidelink Synchronization Signal (SLSS) transmission carriers in device to device (D2D) scenarios. Specifically, the embodiments may relate to a User Equipment (UE) for selecting SLSS transmission carriers in vehicle-to-everything (V2X) scenarios and a related method for selecting the SLSS transmission carriers by an UE.

Although detailed embodiments have been described, these only serve to provide a better understanding of the invention defined by the independent claims, and are not to be seen as limiting. In addition, although the embodiments have been described independently of each other, combinations of the above described embodiments may be used.

## Claims

1. A user equipment, UE, comprising:
a determination unit configured to determine a service of a data signal to be transmitted;
a selection unit configured to select one or more carriers (411, 412, 421) for transmitting a synchronization signal (511) from a carrier set, wherein the synchronization signal (511) is a Sidelink Synchronization Signal, SLSS; and
a transmission unit configured to convey the synchronization signal (511) over the one or more selected carriers (411, 412, 421),
**characterized in that**, the selection unit is further configured to select the one or more carriers (411, 412, 421) for transmitting the synchronization signal (511) based on a mapping between service and carrier, the mapping between service and carrier maps each service of the data signal to one or more carriers (411, 412, 421), and the one or more selected carriers (411, 412, 421) are used for Physical Sidelink Broadcast Channel, PSBCH, transmission, and for different services, the SLSS is transmitted on different carri ers,
wherein the carrier set comprises a carrier set that is selected for Physical Sidelink Control Channel, PSCCH, and/or Physical Sidelink Shared Channel, PSSCH, transmission.

2. The UE according to claim 1, wherein the service comprises a Cooperative Awareness Message, CAM, service, a Decentralized Environmental Notification Message, DENM, service, or a sensor sharing service.

3. The UE according to claim 1, wherein the selection unit is further configured to select the one or more carriers (411, 412, 421) from the carrier set for transmitting the synchronization signal (511) depending on capabilities of the UE.

4. The UE according to claim 1, wherein the selection unit is further configured to select the one or more carriers (411, 412, 421) for transmitting the synchronization signal (511) from the carrier set based on a priority of each carrier.

5. The UE according to claim 4, wherein the selection unit is further configured to select the one or more carriers (411, 412, 421) for transmitting the synchronization signal (511) from the carrier set based on the priority of each carrier, wherein the one or more carriers (411, 412, 421) with higher priorities are selected by the selection unit for transmitting the synchronization signal (511).

6. The UE according to claim 1, wherein the selection unit is further configured to select the one or more carriers (411, 412, 421) for transmitting the synchronization signal (511) based on the mapping between service and carrier, wherein the mapping between service and carrier maps each service of the data signal to one or more carriers (411, 412, 421), and the mapping between carrier and service is obtained from pre-configuration, or network configuration.

7. The UE according to claim 1, wherein the selection unit is further configured to select the one or more carriers (411, 412, 421) for transmitting the synchronization signal (511) based on information from a predetermined list.

8. The UE according to any of claims 1 to 7, wherein the carrier set further comprises any one of, any combination of, or any intersection of one of the following carrier sets:
a carrier set that is configured to do carrier aggregation;
a carrier set that is configured to be used for synchronization signal transmission; or
a carrier set that is configured to be mapped onto a service.

9. A method for operating a user equipment, UE, comprising the steps of:
Determining a service of a data signal to be transmitted;
Selecting (S101) one or more carriers (411, 412, 421) for transmitting a synchronization signal (511) from a carrier set, wherein the synchronization signal (511) is a Sidelink Synchronization Signal, SLSS; and
Transmitting (S102) the synchronization signal (511) over the one or more selected carriers (411, 412, 421),
**characterized in that**, the step of selecting comprises selecting the one or more carriers (411, 412, 421) for transmitting the synchronization signal (511) based on a mapping between service and carrier, the mapping between service and carrier maps each service of the data signal to one or more carriers (411, 412, 421), and the one or more selected carriers (411, 412, 421) are used for Physical Sidelink Broadcast Channel, PSBCH, transmission, and for different services, the SLSS is transmitted on different carriers,
wherein the carrier set comprises a carrier set that is selected for Physical Sidelink Control Channel, PSCCH, and/or Physical Sidelink Shared Channel, PSSCH, transmission.

10. The method according to claim 9, wherein the step of selecting comprises selecting the one or more carriers (411, 412, 421) for transmitting the synchronization signal (511) from the carrier set based on a priority of each carrier.

11. A method for operating a user equipment, UE, comprising the steps of:
Determining (S111) one or more carriers for receiving a synchronization signal (511) from a carrier set; and
Receiving (S112) the synchronization signal (511) over the one or more determined carriers (411, 412, 421), wherein the synchronization signal (511) is a Sidelink Synchronization Signal, SLSS,
**characterized in that**, the one or more carriers (411, 412, 421) for receiving the synchronization signal (511) are determined based on a mapping between service and carrier, the mapping between service and carrier maps each service of a data signal to one or more carriers, and the one or more determined carriers (411, 412, 421) are used for Physical Sidelink Broadcast Channel, PSBCH, transmission, and for different services, the SLSS is transmitted on different carriers,
wherein the carrier set comprises a carrier set that is selected for Physical Sidelink Control Channel, PSCCH, and/or Physical Sidelink Shared Channel, PSSCH, transmission.

12. The method according to claim 11, wherein the carrier set further comprises any one of, any combination of, or any intersection of one of the following carrier sets:
a carrier set that is configured to do carrier aggregation;
a carrier set that is configured to be used for synchronization signal transmission; or
a carrier set that is configured to be mapped onto a service.

13. A user equipment, comprising a storage (102), a processor (101), a transmitter and a receiver (103), wherein the storage is configured to store instructions which, when executed by the processor, cause the UE to execute the method according to any of claims 11-12.

## Patentansprüche

1. Benutzereinrichtung (User Equipment, UE), umfassend:
eine Bestimmungseinheit, die dafür ausgelegt ist, einen Dienst eines zu übertragenden Datensignals zu bestimmen; eine Auswahleinheit, die dafür ausgelegt ist, einen oder mehrere Träger (411, 412, 421) zum Übertragen eines Synchronisationssignals (511) aus einem Trägersatz auszuwählen, wobei das Synchronisationssignal (511) ein Sidelink-Synchronisationssignal (SLSS) ist; und
eine Übertragungseinheit, die dafür ausgelegt ist, das Synchronisationssignal (511) über die ein oder mehreren ausgewählten Träger (411, 412, 421) zu transportieren,
**dadurch gekennzeichnet, dass** die Auswahleinheit ferner dafür ausgelegt ist, die ein oder mehreren Träger (411, 412, 421) zum Übertragen des Synchronisationssignals (511) basierend auf einem Mapping zwischen Dienst und Träger auszuwählen, wobei das Mapping zwischen Dienst und Träger jeden Dienst des Datensignals auf einen oder mehrere Träger (411, 412, 421) abbildet, und die ein oder mehreren ausgewählten Träger (411, 412, 421) zur PSBCH (Physical Sidelink Broadcast Channel)-Übertragung verwendet werden und für verschiedene Dienste das SLSS auf unterschiedlichen Trägern übertragen wird,
wobei der Trägersatz einen Trägersatz umfasst, der zur PSCCH (Physical Sidelink Control Channel)- und/oder zur PSSCH (Physical Sidelink Shared Channel)-Übertragung ausgewählt wird.

2. UE gemäß Anspruch 1, wobei der Dienst einen CAM (Cooperative Awareness Message)-Dienst, einen DENM (Decentralized Environmental Notification Message)-Dienst oder einen Dienst mit gemeinsamer Sensornutzung umfasst.

3. UE gemäß Anspruch 1, wobei die Auswahleinheit ferner dafür ausgelegt ist, die ein oder mehreren Träger (411, 412, 421) aus dem Trägersatz zum Übertragen des Synchronisationssignals (511) in Abhängigkeit von den Fähigkeiten der UE auszuwählen.

4. UE gemäß Anspruch 1, wobei die Auswahleinheit ferner dafür ausgelegt ist, die ein oder mehreren Träger (411, 412, 421) zum Übertragen des Synchronisationssignals (511) aus dem Trägersatz basierend auf einer Priorität jedes Trägers auszuwählen.

5. UE gemäß Anspruch 4, wobei die Auswahleinheit ferner dafür ausgelegt ist, die ein oder mehreren Träger (411, 412, 421) zum Übertragen des Synchronisationssignals (511) aus dem Trägersatz basierend auf der Priorität jedes Trägers auszuwählen, wobei die ein oder mehreren Träger (411, 412, 421) mit höheren Prioritäten durch die Auswahleinheit zum Übertragen des Synchronisationssignals (511) ausgewählt werden.

6. UE gemäß Anspruch 1, wobei die Auswahleinheit ferner dafür ausgelegt ist, die ein oder mehreren Träger (411, 412, 421) zum Übertragen des Synchronisationssignals (511) basierend auf dem Mapping zwischen Dienst und Träger auszuwählen, wobei das Mapping zwischen Dienst und Träger jeden Dienst des Datensignals auf einen oder mehrere Träger (411, 412, 421) abbildet und das Mapping zwischen Träger und Dienst von einer Vorkonfiguration oder einer Netzwerkkonfiguration erhalten wird.

7. UE gemäß Anspruch 1, wobei die Auswahleinheit ferner dafür ausgelegt ist, die ein oder mehreren Träger (411, 412, 421) zum Übertragen des Synchronisationssignals (511) basierend auf Informationen aus einer vorbestimmten Liste auszuwählen.

8. UE gemäß einem der Ansprüche 1 bis 7, wobei der Trägersatz ferner einen, eine Kombination oder eine Schnittmenge der folgenden Trägersätze umfasst:
einen Trägersatz, der dafür ausgelegt ist, eine Trägeraggregation vorzunehmen;
einen Trägersatz, der dafür ausgelegt ist, zur Synchronisationssignalübertragung verwendet zu werden; oder
einen Trägersatz, der dafür ausgelegt ist, auf einen Dienst abgebildet zu werden.

9. Verfahren zum Betreiben einer Benutzereinrichtung (User Equipment, UE), umfassend die Schritte:
Bestimmen eines Dienstes eines zu übertragenden Datensignals;
Auswählen (S101) eines oder mehrerer Träger (411, 412, 421) zum Übertragen eines Synchronisationssignals (511) aus einem Trägersatz, wobei das Synchronisationssignal (511) ein Sidelink-Synchronisationssignal (SLSS) ist; und
Übertragen (S102) des Synchronisationssignals (511) über die ein oder mehreren ausgewählten Träger (411, 412, 421),
**dadurch gekennzeichnet, dass** der Auswahlschritt das Auswählen der ein oder mehreren Träger (411, 412, 421) zum Übertragen des Synchronisationssignals (511) basierend auf einem Mapping zwischen Dienst und Träger umfasst, wobei das Mapping zwischen Dienst und Träger jeden Dienst des Datensignals auf einen oder mehrere Träger (411, 412, 421) abbildet, und die ein oder mehreren ausgewählten Träger (411, 412, 421) zur PSBCH (Physical Sidelink Broadcast Channel)-Übertragung verwendet werden und für verschiedene Dienste das SLSS auf unterschiedlichen Trägern übertragen wird,
wobei der Trägersatz einen Trägersatz umfasst, der zur PSCCH (Physical Sidelink Control Channel)- und/oder zur PSSCH (Physical Sidelink Shared Channel)-Übertragung ausgewählt wird.

10. Verfahren gemäß Anspruch 9, wobei der Auswahlschritt das Auswählen der ein oder mehreren Träger (411, 412, 421) zum Übertragen des Synchronisationssignals (511) aus dem Trägersatz basierend auf einer Priorität jedes Trägers umfasst.

11. Verfahren zum Betreiben einer Benutzereinrichtung (User Equipment, UE), umfassend die Schritte:
Bestimmen (S111) eines oder mehrerer Träger zum Empfangen eines Synchronisationssignals (511) aus einem Trägersatz; und
Empfangen (S112) des Synchronisationssignals (511) über die ein oder mehreren bestimmten Träger (411, 412, 421), wobei das Synchronisationssignal (511) ein Sidelink-Synchronisationssignal (SLSS) ist,
**dadurch gekennzeichnet, dass** die ein oder mehreren Träger (411, 412, 421) zum Empfangen des Synchronisationssignals (511) basierend auf einem Mapping zwischen Dienst und Träger bestimmt werden, wobei das Mapping zwischen Dienst und Träger jeden Dienst eines Datensignals auf einen oder mehrere Träger abbildet, und die ein oder mehreren bestimmten Träger (411, 412, 421) zur PSBCH (Physical Sidelink Broadcast Channel)-Übertragung verwendet werden und für verschiedene Dienste das SLSS auf unterschiedlichen Trägern übertragen wird,
wobei der Trägersatz einen Trägersatz umfasst, der zur PSCCH (Physical Sidelink Control Channel)- und/oder zur PSSCH (Physical Sidelink Shared Channel)-Übertragung ausgewählt wird.

12. Verfahren gemäß Anspruch 11, wobei der Trägersatz ferner einen, eine Kombination oder eine Schnittmenge der folgenden Trägersätze umfasst:
einen Trägersatz, der dafür ausgelegt ist, eine Trägeraggregation vorzunehmen;
einen Trägersatz, der dafür ausgelegt ist, zur Synchronisationssignalübertragung verwendet zu werden; oder
einen Trägersatz, der dafür ausgelegt ist, auf einen Dienst abgebildet zu werden.

13. Benutzereinrichtung (User Equipment, UE), umfassend einen Datenspeicher (102), einen Prozessor (101), einen Sender und einen Empfänger (103), wobei der Datenspeicher dafür ausgelegt ist, Anweisungen zu speichern, die, wenn sie von dem Prozessor ausgeführt werden, die UE veranlassen, das Verfahren gemäß einem der Ansprüche 11-12 auszuführen.

## Revendications

1. Équipement utilisateur, UE, comprenant :
une unité de détermination configurée pour déterminer un service d'un signal de données à transmettre ;
une unité de sélection configurée pour sélectionner une ou plusieurs porteuses (411, 412, 421) afin de transmettre un signal de synchronisation (511) à partir d'un ensemble de porteuses, le signal de synchronisation (511) étant un signal de synchronisation de liaison latérale, SLSS ; et
une unité de transmission configurée pour acheminer le signal de synchronisation (511) sur les une ou plusieurs porteuses (411, 412, 421) sélectionnées,
**caractérisé en ce que**, l'unité de sélection est en outre configurée pour sélectionner les une ou plusieurs porteuses (411, 412, 421) afin de transmettre le signal de synchronisation (511) sur la base d'un mappage entre un service et une porteuse, le mappage entre le service et la porteuse mappe chaque service du signal de données sur une ou plusieurs porteuses (411, 412, 421), et les une ou plusieurs porteuses (411, 412, 421) sélectionnées sont utilisées pour une transmission de canal de diffusion de liaison latérale physique, PSBCH, et pour différents services, le SLSS est transmis sur différentes porteuses,
l'ensemble de porteuses comprenant un ensemble de porteuses qui est sélectionné pour une transmission de canal de commande de liaison latérale physique, PSCCH, et/ou de canal partagé de liaison latérale physique, PSSCH.

2. UE selon la revendication 1, dans lequel le service comprend un service de message de conscience coopérative, CAM, un service de message de notification environnementale décentralisé, DENM, ou un service de partage de capteurs.

3. UE selon la revendication 1, dans lequel l'unité de sélection est en outre configurée pour sélectionner les une ou plusieurs porteuses (411, 412, 421) parmi l'ensemble de porteuses pour transmettre le signal de synchronisation (511) en fonction des capacités de l'UE.

4. UE selon la revendication 1, dans lequel l'unité de sélection est en outre configurée pour sélectionner les une ou plusieurs porteuses (411, 412, 421) afin de transmettre le signal de synchronisation (511) à partir de l'ensemble de porteuses sur la base d'une priorité de chaque porteuse.

5. UE selon la revendication 4, dans lequel l'unité de sélection est en outre configurée pour sélectionner les une ou plusieurs porteuses (411, 412, 421) afin de transmettre le signal de synchronisation (511) à partir de l'ensemble de porteuses sur la base de la priorité de chaque porteuse, les une ou plusieurs porteuses (411, 412, 421) ayant des priorités plus élevées étant sélectionnées par l'unité de sélection pour transmettre le signal de synchronisation (511).

6. UE selon la revendication 1, dans lequel l'unité de sélection est en outre configurée pour sélectionner les une ou plusieurs porteuses (411, 412, 421) afin de transmettre le signal de synchronisation (511) sur la base du mappage entre le service et la porteuse, le mappage entre le service et la porteuse mappant chaque service du signal de données sur une ou plusieurs porteuses (411, 412, 421), et le mappage entre la porteuse et le service étant obtenu à partir d'une préconfiguration, ou d'une configuration de réseau.

7. UE selon la revendication 1, dans lequel l'unité de sélection est en outre configurée pour sélectionner les une ou plusieurs porteuses (411, 412, 421) pour transmettre le signal de synchronisation (511) sur la base d'informations provenant d'une liste prédéterminée.

8. UE selon l'une quelconque des revendications 1 à 7, dans lequel l'ensemble de porteuses comprend en outre un ensemble quelconque parmi, toute combinaison de, ou toute intersection de l'un des ensembles de porteuses suivants :
un ensemble de porteuses qui est configuré pour faire une agrégation de porteuses ;
un ensemble de porteuses qui est configuré pour être utilisé pour une transmission de signal de synchronisation ; ou
un ensemble de porteuses qui est configuré pour être mappé sur un service.

9. Procédé de fonctionnement d'un équipement utilisateur, UE, comprenant les étapes consistant à :
déterminer un service d'un signal de données à transmettre ;
sélectionner (S101) une ou plusieurs porteuses (411, 412, 421) pour transmettre un signal de synchronisation (511) à partir d'un ensemble de porteuses, le signal de synchronisation (511) étant un signal de synchronisation de liaison latérale, SLSS ; et
transmettre (S102) le signal de synchronisation (511) sur les une ou plusieurs porteuses (411, 412, 421) sélectionnées,
**caractérisé en ce que**, l'étape consistant à sélectionner comprend la sélection des une ou plusieurs porteuses (411, 412, 421) pour transmettre le signal de synchronisation (511) sur la base d'un mappage entre un service et une porteuse, le mappage entre le service et la porteuse mappe chaque service du signal de données sur une ou plusieurs porteuses (411, 412, 421), et les une ou plusieurs porteuses (411, 412, 421) sélectionnées sont utilisées pour une transmission de canal de diffusion de liaison latérale physique, PSBCH, et pour différents services, le SLSS est transmis sur différentes porteuses,
l'ensemble de porteuses comprenant un ensemble de porteuses qui est sélectionné pour une transmission de canal de commande de liaison latérale physique, PSCCH, et/ou de canal partagé de liaison latérale physique, PSSCH.

10. Procédé selon la revendication 9, dans lequel l'étape consistant à sélectionner comprend la sélection des une ou plusieurs porteuses (411, 412, 421) pour transmettre le signal de synchronisation (511) à partir de l'ensemble de porteuses sur la base d'une priorité de chaque porteuse.

11. Procédé de fonctionnement d'un équipement utilisateur, UE, comprenant les étapes consistant à :
déterminer (S111) une ou plusieurs porteuses pour recevoir un signal de synchronisation (511) en provenance d'un ensemble de porteuses ; et
recevoir (S112) le signal de synchronisation (511) sur les une ou plusieurs porteuses déterminées (411, 412, 421), le signal de synchronisation (511) étant un signal de synchronisation de liaison latérale, SLSS,
**caractérisé en ce que**, les une ou plusieurs porteuses (411, 412, 421) pour recevoir le signal de synchronisation (511) sont déterminées sur la base d'un mappage entre un service et une porteuse, le mappage entre le service et la porteuse mappe chaque service d'un signal de données sur une ou plusieurs porteuses, et les une ou plusieurs porteuses (411, 412, 421) déterminées sont utilisées pour une transmission de canal de diffusion de liaison latérale physique, PSBCH, et pour différents services, le SLSS est transmis sur différentes porteuses,
l'ensemble de porteuses comprenant un ensemble de porteuses qui est sélectionné pour une transmission de canal de commande de liaison latérale physique, PSCCH, et/ou de canal partagé de liaison latérale physique, PSSCH.

12. Procédé selon la revendication 11, dans lequel l'ensemble de porteuses comprend en outre un ensemble quelconque parmi, toute combinaison de, ou toute intersection de l'un des ensembles de porteuses suivants :
un ensemble de porteuses qui est configuré pour faire une agrégation de porteuses ;
un ensemble de porteuses qui est configuré pour être utilisé pour une transmission de signal de synchronisation ; ou
un ensemble de porteuses qui est configuré pour être mappé sur un service.

13. Équipement utilisateur, comprenant un support de stockage (102), un processeur (101), un émetteur et un récepteur (103), le support de stockage étant configuré pour stocker des instructions qui, lorsqu'elles sont exécutées par le processeur, amènent l'UE à exécuter le procédé selon l'une quelconque des revendications 11 à 12.
